# EUROPÄISCHE PATENTSCHRIFT

(11) **EP 0 579 969 B1**
(45) Veröffentlichungstag und Bekanntmachung des Hinweises auf die Patenterteilung: **10.01.1996**
(21) Anmeldenummer: 93109985.7
(22) Anmeldetag: 23.06.1993
(51) Int. Cl.: F16C 13/04, B41F 17/20

(54) **Wellenlager an einer Bearbeitungsmaschine**
Shaft bearing for processing machine
Palier d'arbre pour machine d'usinage

(30) Priorität: 09.07.1992 CH 2163/92
(43) Veröffentlichungstag der Anmeldung: 26.01.1994
(73) Patentinhaber: MDC Max Dätwyler Bleienbach AG, CH-3368 Bleienbach (CH)
(72) Erfinder: Dätwyler, Max, CH-3368 Bleienbach (CH)
(74) Vertreter: Patentanwälte Schaad, Balass & Partner AG

(56) Entgegenhaltungen:
- DE-U- 8 432 100

## Beschreibung

Die Erfindung betrifft ein Wellenlager an einer Bearbeitungsmaschine gemäss dem Oberbegriff des Anspruches 1.

Bei einer bekannten Bearbeitungsmaschine dieser Art zum Bearbeiten der Oberfläche von Tiefdurckzylindern, wie sie z.B. in der DE-A 4112763 beschrieben und von der Firma MDC Max Dätwyler AG unter der Bezeichnung "POLISHMASTER" vertrieben wird, sind die beiden Lager zur Lagerung der Wellenenden der Tiefdruckzylinder nur dazu geeignet, Wellenenden eines bestimmten Durchmessers aufzunehmen. Zur Lagerung von Tiedruckzylindern mit Wellenenden, die einen anderen Durchmesser besitzen, müssen die beiden Lager, oder zumindest ihre Lagerschalen gegen ein anderes Lager bzw. eine andere Lagerschale ausgewechselt werden. Das Auswechseln der Lager oder Lagerschalen benötigt Zeit.

Die Aufgabe, welche mit der vorliegenden Erfindung gelöst werden soll, besteht in der Schaffung eines solchen Lagers, das sich leichter als das bekannte Lager den unterschiedlichen Wellendurchmessern der zu bearbeitenden Werkstücke anpassen lässt.

Diese Aufgabe wird erfindungsgemäss durch die Merkmale im Kennzeichen des Anspruches 1 gelöst.

Mit Hilfe der Betätigungsvorrichtung ist es auf einfache Weise möglich, in kürzester Zeit die passende Lagerschale im Wellenlager in Arbeitsstellung zu bringen. Somit lassen sich in der Bearbeitungsmaschine Werkstücke mit unterschiedlichen Wellendurchmessern ohne umständliche Umstellungsarbeiten an der Bearbeitungsmaschine bearbeiten. Diese leichte Umstellbarkeit der Lagerschalen ist vor allem bei einem vollautomatisierten Betrieb von ganz grossem Vorteil.

Ein Ausführungsbeispiel des erfindungsgemässen Wellenlagers ist im folgenden anhand der beigefügten Zeichnung ausführlich beschrieben. Es zeigen rein schematisch:
- Fig. 1: eine Seitenansicht des einen Endes einer Bearbeitungsmaschine mit einem Wellenlager teilweise im Schnitt, dem zu lagernden Werkstück und einer Vorrichtung zum Drehen des Werkstückes;
- Fig. 2: einen Querschnitt durch das Wellenlager nach Linie II-II in Fig. 1 mit zwei Drehkörpern, die sich in ihrer ersten Stellung befinden;
- Fig. 3: einen Querschnitt durch das Wellenlager nach Linie III-III in Fig. 1 mit der Vorrichtung zum Drehen der genannten Drehkörper in einer ersten Stellung;
- Fig. 4 und 5: dasselbe wie Fig. 3 mit der Vorrichtung zum Drehen der genannten Drehkörper in einer zweiten bzw. dritten Stellung;
- Fig. 6: dasselbe wie Fig. 2 mit den beiden Drehkörpern in einer zweiten Stellung.

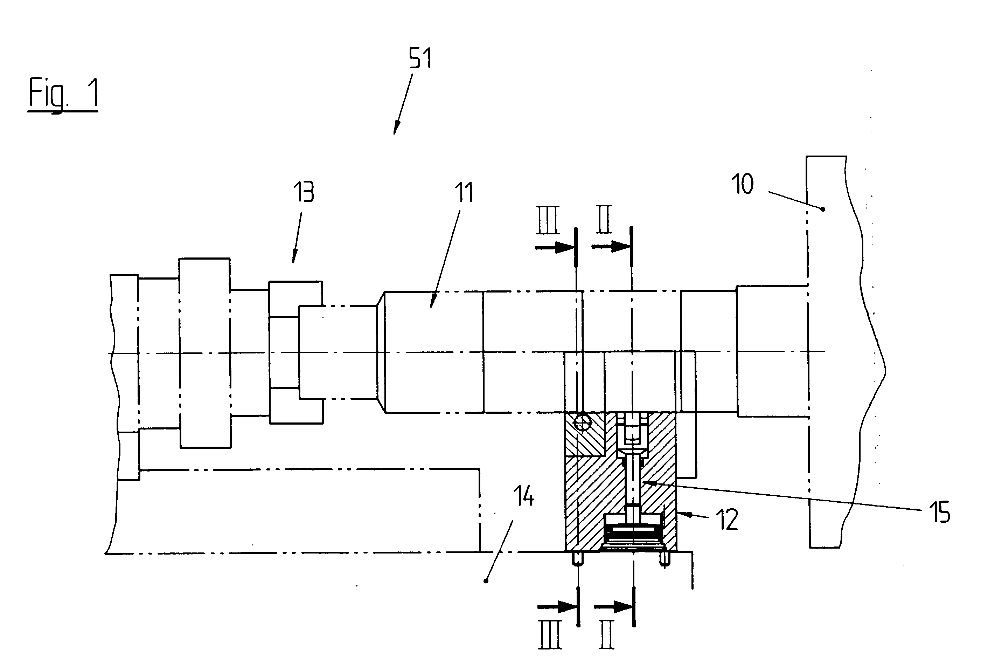

Gemäss Fig. 1 ist in einer Bearbeitungsmaschine 51 als Werkstück ein Tiefdruckzylinder 10 mit seinem einen Wellenende 11 auf einem Wellenlager 12 drehbar gelagert. Das gegenüberliegende, nicht dargestellte Wellenende ist auf einem zweiten, ebenfalls nicht dargestellten Wellenlager gelagert, das genau gleich ausgebildet ist wie das Wellenlager 12. Zum Antrieb des Werkstückes ist ein an sich bekannter Antrieb 13 mit einem Dreibacken-Futter vorhanden, der hier nur andeutungsweise dargestellt ist. Zur Bearbeitung des Werkstückes wird dieses durch den Antrieb 13 mit der gewünschten Geschwindigkeit in der gewünschten Richtung gedreht. Das Wellenlager 12 ist auf einem Schlitten 14 befestigt. Dieser Schlitten 14 und auch der zweite Schlitten für das nicht dargestellte, zweite Wellenlager lassen sich entsprechend der Länge des zu bearbeitenden Werkstückes 10 in gewissen Grenzen verschieben. Zur Entlastung des Wellenlagers 12 bei sehr schweren Werkstücken 10 ist eine Abstützvorrichtung 15 vorhanden, die weiter hinten ausführlich beschrieben ist.

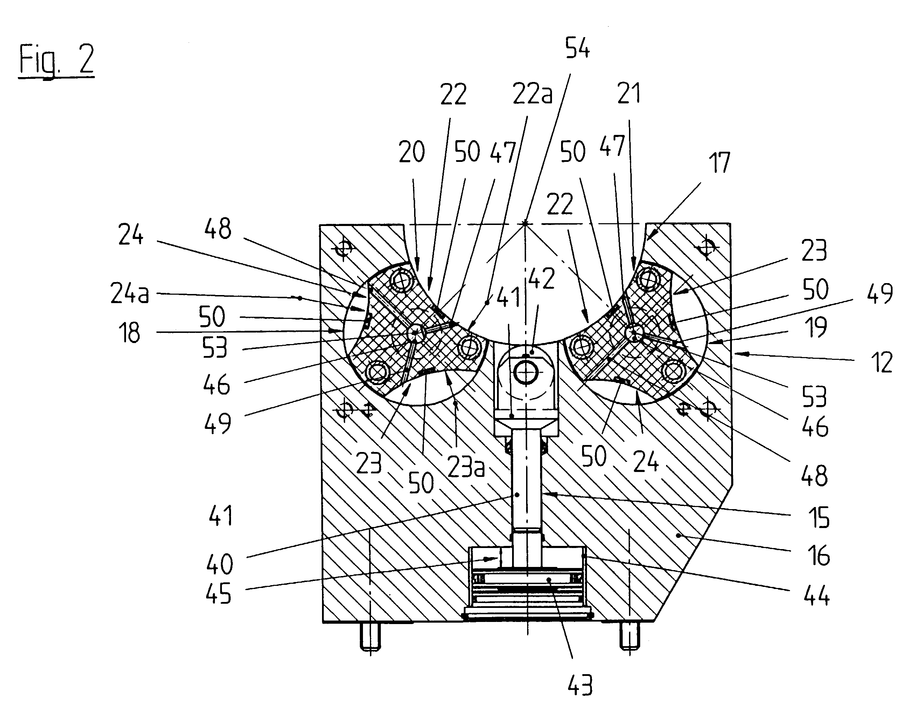

Gemäss Fig. 2 weist das Wellenlager 12 einen Lagerbock 16 auf, der zur Aufnahme des Wellenendes 11 (Fig. 1) eine halbkreisförmige Aussparung 17 besitzt. Unterhalb dieser Aussparung 17 sind zwei weitere Aussparungen 18 und 19 vorhanden, in denen sich zwei Drehkörper 20 und 21 befinden, die sich bezüglich einer Mittelebene des Wellenlagers 12 gegenüberliegen. Jeder dieser Drehkörper 20, 21 ist um eine parallel zur Lagerachse 54 parallele Drehkörperachse 53 drehbar gelagert. Diese beiden Drehkörperachsen 53 sind symmetrisch zur Mittelebene des Wellenlagers 12 angeordnet.

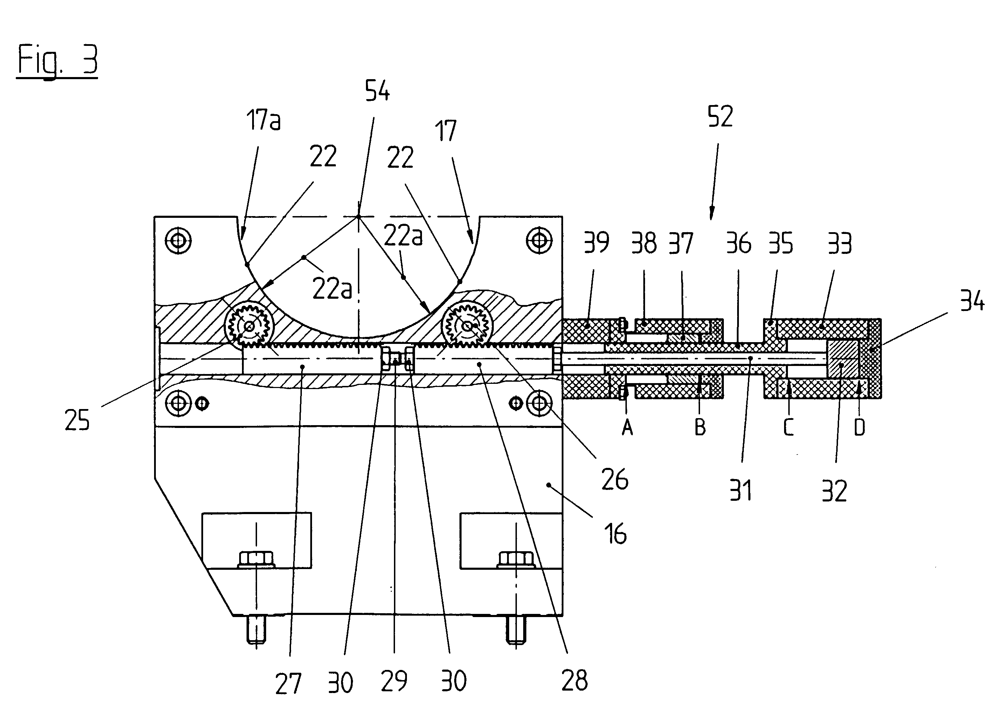

Diese beiden Drehkörper 20, 21 sind gleich ausgebildet. Im folgenden ist daher nur einer beschrieben. Der Drehkörper 20 ist aus drei Lagerschalen 22, 23 und 24 zusammengesetzt, die hier zu einem einzigen Drehkörper 20 integriert sind. Diese drei Lagerschalen 22, 23 und 24 unterscheiden sich lediglich durch ihren Nenndurchmesser 22a, 23a und 24a. Dieser Nenndurchmesser 22a, 23a und 24a entspricht dem Durchmesser des Wellenendes 11 am Werkstück 10. In der gezeigten Stellung des Drehkörpers 20 befindet sich die Lagerschale 22 in ihrer Arbeitsstellung, und die beiden Lagerschalen 23 und 24 befinden sich in Ruhestellung. Dies bedeutet, dass in der gezeigten Stellung der beiden Drehkörper 20 und 21 nur ein Werkstück 10 mit einem Wellenende 11 in das Wellenlager 12 eingesetzt werden kann, das einen Wellendurchmesser besitzt, der dem Nenndurchmesser 22a entspricht. Durch Drehen der beiden Drehkörper 20 und 21 kann eine der beiden anderen Lagerschalen 23 oder 24 in Arbeitsstellung gebracht werden, so dass ein Werkstück 10 mit einem anderen Wellendurchmesser eingesetzt werden kann. Dank den drei Lagerschalen 22, 23 und 24 ist es somit möglich, Wellenenden 11 von drei unterschiedlichen Durchmessern in das Wellenlager 12 einzusetzen, wie das aus den Fig. 3, 4 und 5 ersichtlich ist.

Eine Betätigungsvorrichtung 52 zum Drehen der Drehkörper 20, 21 ist im folgenden beschrieben. Gemäss Fig. 3 ist an jedem Drehkörper 20 und 21 (Fig. 2) ein Zahnritzel 25 bzw. 26 befestigt. Jedes dieser Zahnritzel 25 und 26 steht mit einer Zahnstange 27, 28 in Eingriff. Die beiden Zahnstangen 27, 28 sind über eine Schraube 29 und Gegenmuttern 30 miteinander verbunden. Diese Schraubenverbindung 29, 30 zwischen den beiden Zahnstangen 27, 28 ermmöglicht es, die Stellung der beiden Drehkörper 20 und 21 (Fig. 2) genau aufeinander abzustimmen, so dass sie richtig an dem zu lagernden Wellenende 11 (Fig. 1) des Werkstückes 10 anliegen. An die Zahnstange 28 ist eine Kolbenstange 31 angeschraubt, welche die beiden Zahnstangen 27, 28 mit einem Betätigungskolben 32 verbindet. Dieser Betätigungskolben 32 befindet sich in einem ersten verschiebbaren Zylinder 33. Dieser Zylinder ist durch zwei Deckel 34 und 35 abgeschlossen. Mit dem einen Deckel 35 ist eine zweite hülsenförmige Kolbenstange 36 einstückig ausgebildet. Auf dieser hülsenförmigen Kolbenstange 36 ist ein zweiter Kolben 37 befestigt, der sich in einem zweiten, ortsfesten Zylinder 38 befindet. Der zweite Zylinder 38 ist über ein Verbindungsstück 39 am Lagerbock 16 befestigt. Zum Verschieben der beiden Kolben 32 und 37 in den beiden Zylindern 33 und 38 sind vier Druckleitungen vorhanden, welche in der Zeichnung bloss durch vier Pfeile A, B, C, D angedeutet sind. Diese beiden Zylinder 33 und 38 zusammen mit den Kolben 32 und 37 bilden die Vorrichtung 52 zum Betätigen, d.h. zum jeweils gleichsinnigen Drehen der beiden Drehkörper 20 und 21 in drei verschiedene Stellungen. Diese drei Stellungen sind aus den drei Figuren. 3, 4 und 5, auf die später nochmals eingegangen wird, ersichtlich.

Gemäss Fig. 2 führt von einer zentralen Bohrung 46 in jedem Drehkörper 20, 21 je eine Bohrung 47, 48, 49 zu den drei Lagerschalen 22, 23 und 24. Durch diese zentrale Bohrung 46 und diese drei weiteren Bohrungen 47, 48, 49 kann der jeweils in Arbeitsstellung befindlichen Lagerschale 22, 23 oder 24 Schmierflüssigkeit zugeführt werden. Vorzugsweise führen zu jeder Lagerschale 22, 23 oder 24 zwei axial nebeneinander angeordnete Bohrungen 47, 48 oder 49. Ferner sind Hartmetalleinsätze 50 in jeder Lagerschale 22, 23 und 24 vorgesehen, die zum Schutz der Lagerflächen dienen, indem sie kleinere Unebenheiten in der Oberläche des Wellenendes 11 ausglätten.

Die im folgenden beschriebene Abstützvorrichtung 15 ist nur für schwere Werkstücke 10 erforderlich.

Gemäss Fig. 2 weist die Abstützvorrichtung 15 eine hebund senkbare Stange 40 auf. Am oberen Ende dieser Stange 40 befindet sich eine Gabel 41, in welcher eine Rolle 42 gelagert ist, auf der sich das Wellenende 11 des Werkstükkes 10 abstützen kann. Am unteren Ende dieser Stange 40 befindet sich ein Kolben 43, der in einem Zylinder 44 um den Hub 45 verschiebbar gelagert ist. Der Zylinder 44 ist in den Lagerbock 16 eingesetzt. In Fig. 2 ist dieser Kolben 43 in seiner untersten Stellung gezeigt. Zur Entlastung der Lagerschalen 22, 23 oder 24 der beiden Drehkörper 20 und 21 wird der Kolben 43 durch ein Druckmedium angehoben, so dass über die Stange 40 auch die Rolle 42 angehoben und gegen das Wellenende 11 des Werkstückes 10 gedrückt wird, so dass das Wellenlager 12 entlastet wird. Dabei wird das Wellenende 11 nach wie vor durch die Lagerschalen 22, 23 oder 24 geführt, die jedoch nicht mit dem vollen Gewicht des Werkstückes 10 belastet sind.

Gemäss den Fig. 2 und 3 befinden sich die Lagerschalen 22 der beiden Drehkörper 20 und 21 in Arbeitsstellung. Der Nenndurchmesser 22a entspricht genau dem Durchmesser 17a der Aussparung 17, wie dies insbesondere aus Fig. 2 ersichtlich ist. Daher stehen die Lagerschalen 22 der Drehkörper 20 und 21 in Fig. 3 nicht vor. In dieser Stellung der beiden Drehkörper 20, 21 befinden sich die beiden Zahnstangen 27 und 28 in ihrer rechten Endstellung wie aus der Fig. 3. ersichtlich ist. Ebenso befinden sich die beiden Kolben 32 und 37 in ihrer rechten Endstellung in den Zylindern 33 und 38. Auch der verschiebbare Zylinder 33 befindet sich in seiner rechten Endstellung. Zu diesem Zweck stehen die beiden Druckleitungen A und C unter Druck, und die beiden Druckleitungen B und D stehen unter einem kleineren Druck oder sind drucklos.

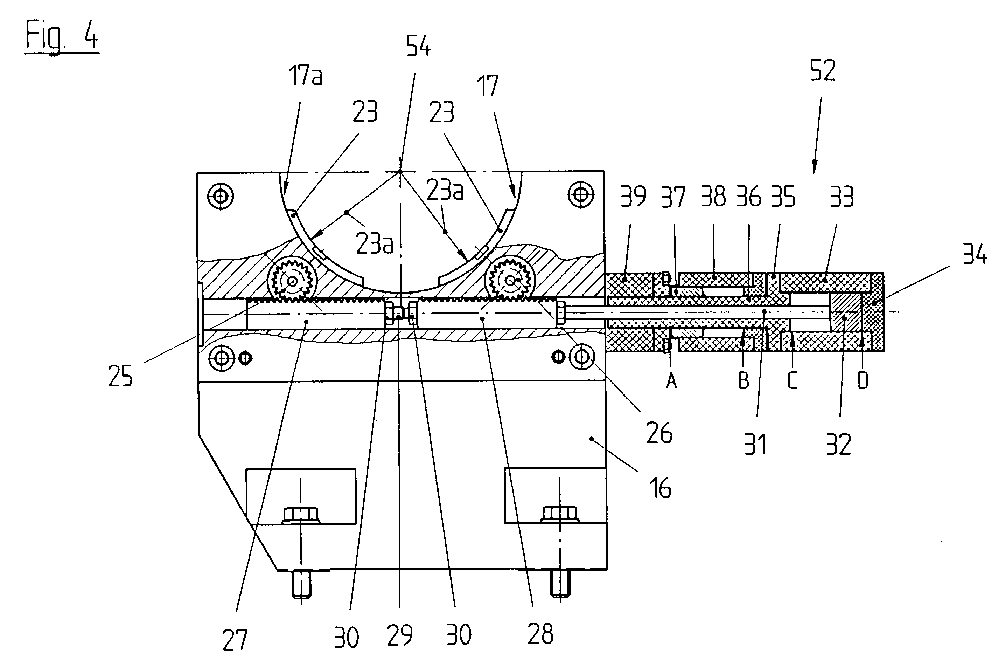

Gemäss Fig. 4 befinden sich die Lagerschalen 23 der beiden Drehkörper 20 und 21 in Arbeitsstellung. Der Nenndurchmesser 23a ist kleiner als der Durchmesser 17a der Aussparung 17, so dass die beiden Lagerschalen 23 der beiden Drehkörper 20 und 21 in Fig. 4 vorstehen. In dieser Stellung der beiden Drehkörper 20 und 21 befinden sich die beiden Zahnstangen 27 und 28 in ihrer Mittelstellung, wie aus Fig. 4 ersichtlich ist. Der erste Kolben 32 ist in seiner rechten Endstellung geblieben, der zweite Kolben 37 wurde in seine linke Endstellung verschoben, somit ist auch der verschiebbare Zylinder 33 in seine linke Endstellung gelangt. Zu diesem Zweck stehen die beiden Leitungen B und C unter Druck und die beiden anderen Druckleitungen A und D stehen unter einem kleineren Druck oder sind drucklos.

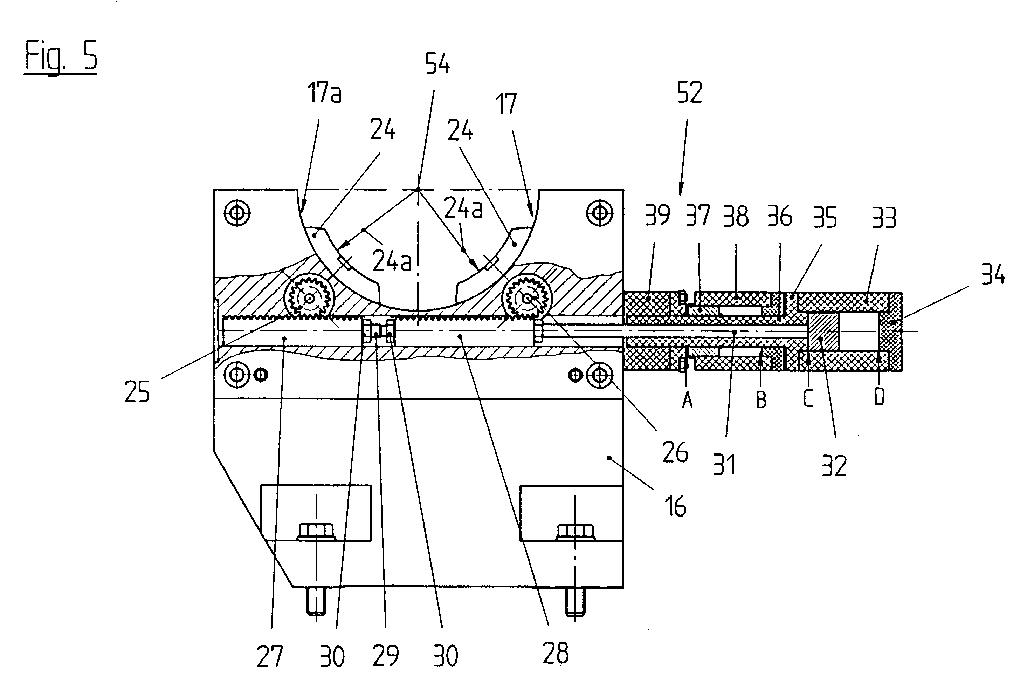

Gemäss Fig. 5 befinden sich die Lagerschalen 24 der beiden Drehkörper 20 und 21 in Arbeitsstellung. Der Nenndurchmesser 24a ist noch kleiner als der Durchmesser 17a der Aussparung 17, so dass die beiden Lagerschalen 24 der beiden Drehkörper 20 und 21 in Fig. 5 etwas mehr vorstehen als die Lagerschalen 23 in Fig. 4. In dieser Stellung der beiden Drehkörper 20 und 21 befinden sich die beiden Zahnstangen 27 und 28 in ihrer linken Endstellung, wie aus Fig. 5 ersichtlich ist. Ebenso befinden sich die beiden Kolben 32 und 37 in ihrer linken Endstellung in den Zylindern 33 und 38. Somit ist auch der verschiebbare Zylinder 33 in seiner linken Endstellung. Zu diesem Zweck stehen die beiden Druckleitungen B und D unter Druck, und die beiden Druckleitungen A und C stehen unter einem kleineren Druck oder sind drucklos.

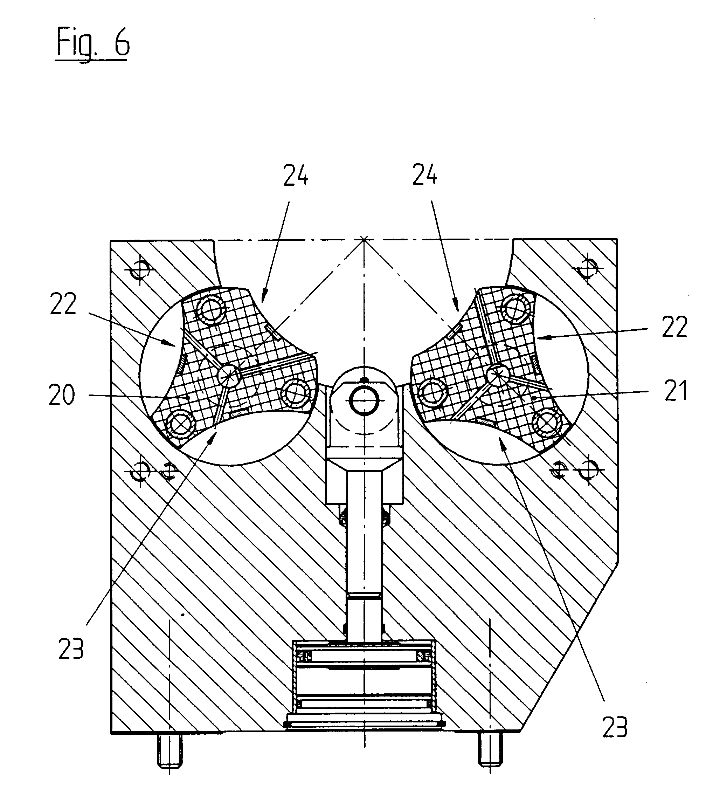

Gemäss Fig. 6 befinden sich die Lagerschalen 24 der beiden Drehkörper 20 und 21 in Arbeitsstellung, so dass der Durchmesser des Wellenendes 11 des Werkstückes 10 dem Nenndurchmesser 24a dieser Lagerschalen 24 entsprechen muss. Entsprechend ist auch der Kolben 43 der Abstützvorrichtung 15 um den Hub 45 (siehe Fig. 2) angehoben worden.

Im Gegensatz zu den in Fig. 2 dargestellten Drehkörpern 20, 21 sind die in Fig. 6 dargestellten Drehkörper 20, 21 spiegelbildlich ausgebildet. Damit z.B. statt der beiden Lagerschalen 24 die beiden Lagerschalen 22 in Arbeitsstellung gelangen, müssen die beiden Drehkörper 20, 21 in entgegengesetztem Sinn gedreht werden, d.h. der Drehkörper 20 wird im Uhrzeigersinn und der Drehkörper 21 wird im Gegenuhrzeigersinn gedreht. Die Betätigungsvorrichtung 52 müsste daher entsprechend anders ausgebildet sein. Die Betätigungsvorrichtung 52 könnte z.B. nur mit einem der Drehkörper 20, 21 antriebsverbunden sein und die Drehung dieses einen Drehkörpers über ein Zwischenrad gegensinnig auf den andern Drehkörper übertragen werden.

Vorzugsweise werden nach dem Verstellen der Drehkörper 20, 21 in die gewünschte Position die Druckleitungen A, B, C, D der Betätigungsvorrichtung 52 drucklos gehalten, damit sich die Lagerschalen 22, 23, 24 unter dem Gewicht des Werkstückes 10 selbst zentrieren können.

Es versteht sich, dass sich das erfindungsgemässe Wellenlager nicht nur für Bearbeitungsmaschinen für Tiefdruckzylinder eignet, sondern auch für andere Arten von Bearbeitungsmaschinen, bei denen Werkstücke mit unterschiedlichen Wellendurchmessern drehbar gelagert werden müssen.

## Patentansprüche

1. Wellenlager (12) an einer Bearbeitungsmaschine (51) zur Lagerung der Wellenenden (11) eines zu bearbeitenden, sich drehenden Werkstückes (10), insbesondere eines Tiefdruckzylinders, mit einem Lagerbock (16), der eine austauschbare Lagerschale (22, 23, 24) enthält, auf der sich eines der Wellenenden (11) abstützt, dadurch gekennzeichnet, dass im Lagerbock (16) mindestens zwei Lagerschalen (22, 23, 24) mit unterschiedlichen Nenndurchmessern (22a, 23a, 24a) angeordnet sind, von denen sich eine in Arbeitsstellung und die andere in Ruhestellung befindet, und dass eine Betätigungsvorrichtung (52) zum gleichzeitigen Verbringen der einen Lagerschale (22) aus ihrer Arbeitsstellung in ihre Ruhestellung und der anderen Lagerschale (23, 24) aus ihrer Ruhestellung in ihre Arbeitsstellung vorgesehen ist.

2. Wellenlager (12) nach Anspruch 1, dadurch gekennzeichnet, dass die Lagerschalen (22, 23, 24) an mindestens einem Drehkörper (20, 21) ausgebildet sind, der durch die Betätigungsvorrichtung (52) um eine zur Lagerlängsachse (54) parallele Achse (53) drehbar ist.

3. Wellenlager (12) nach Anspruch 2, dadurch gekennzeichnet, dass in einem Lagerbock (16) zwei Drehkörper (20, 21) angeordnet sind, die sich bezüglich einer Mittelebene des Wellenlagers (12) gegenüberliegen, wobei jeweils die sich in Arbeitsstellung befindlichen Lagerschalen (22) der beiden Drehkörper (20, 21) zusammen eine Auflage für das Wellenende (11) bilden.

4. Wellenlager (12) nach Anspruch 3, dadurch gekennzeichnet, dass die Betätigungsvorrichtung (52) mit den Drehkörpern (20, 21) zur gemeinsamen, gleichzeitigen Drehung der Drehkörper (20, 21) antriebsverbunden ist.

5. Wellenlager (12) nach Anspruch 4, dadurch gekennzeichnet, dass die Drehkörper (20, 21) im gleichen oder entgegengesetzten Drehsinn von der Betätigungsvorrichtung (52) angetrieben sind.

6. Wellenlager (12) nach Anspruch 2 oder 4, dadurch gekennzeichnet, dass die Betätigungsvorrichtung (52) ein am Drehkörper (20, 21) befestigtes Zahnritzel (25, 26) aufweist, das mit einer Zahnstange (27, 28) in Eingriff steht, welche von einer Zylinder-Kolben-Anordnung (32, 37, 33, 38) hin- und her verschiebbar ist.

7. Wellenlager (12) nach Anspruch 6, dadurch gekennzeichnet, dass die Zylinder-Kolben-Anordnung (32, 37, 33, 38) einen ersten Kolben (32)in einem verschiebbaren Zylinder (33) aufweist, sowie einen zweiten Kolben (37), der am verschiebbaren Zylinder (33) befestigt ist und sich in einem zweiten, ortsfesten Zylinder (38) befindet, um drei unterschiedliche Lagerschalen (22, 23, 24) wahlweise in Arbeitsstellung zu bringen.

8. Wellenlager (12) nach Anspruch 1, dadurch gekennzeichnet, dass ein heb- und senkbares Abstützorgan (15) für das Wellenende (11) vorhanden ist zur Entlastung der Lagerschalen (22, 23, 24) des Wellenlagers (12).

9. Wellenlager (12) nach Anspruch 8, dadurch gekennzeichnet, dass das Abstützorgan (15) eine Rolle (42) aufweist, die über eine Stange (40) mit einem Kolben (43) verbunden ist, zur radialen Verschiebung der Rolle (42) gegenüber dem Wellenende (11) des Werkstückes (10).

10. Wellenlager (12) nach Anspruch 2, dadurch gekennzeichnet, dass der Drehkörper (20, 21) eine Bohrung (46, 47, 48, 49) zur Zufuhr von Schmiermittel zur jeweils sich in der Arbeitsstellung befindlichen Lagerschale (22, 23, 24) aufweist.

11. Wellenlager (12) nach Anspruch 1, dadurch gekennzeichnet, dass jede Lagerschale (22, 23, 24) eine Hartmetalleinlage (50) aufweist, die zum Schutz der Lageroberfläche dient.

## Claims

1. Shaft bearing (12) on a processing machine (51) for bearing the shaft ends (11) of a rotating workpiece (10) to be processed, in particular an intaglio printing cylinder, having a bearing block (16) which contains an exchangeable bearing shell (22, 23, 24) on which one of the shaft ends (11) is supported, characterized in that at least two bearing shells (22, 23, 24) of different nominal diameters (22a, 23a, 24a) are arranged in the bearing block (16), one of which bearing shells is in the operating position and the other is in the rest position, and in that an actuating device (52) is provided for simultaneously moving the one bearing shell (22) out of its operating position into its rest position and the other bearing shell (23, 24) out of its rest position into its operating position.

2. Shaft bearing (12) according to Claim 1, characterized in that bearing shells (22, 23, 24) are formed on at least one rotary body (20, 21) which can be rotated by the actuating device (52) about an axis (53) parallel to the longitudinal axis (54) of the bearing.

3. Shaft bearing (12) according to Claim 2, characterized in that two rotary bodies (20, 21) are arranged in a bearing block (16), which are located opposite one another in relation to a centre-plane of the shaft bearing (12), in each case the bearing shells (22) of the two rotary bodies (20, 21) in the operating position together forming a rest for the shaft end (11).

4. Shaft bearing (12) according to Claim 3, characterized in that the actuating device (52) is connected in terms of drive to the rotary bodies (20, 21) for the joint simultaneous rotation of the rotary bodies (20, 21).

5. Shaft bearing (12) according to Claim 4, characterized in that the rotary bodies (20, 21) are driven by the actuating device (52) in the same or the opposite direction of rotation.

6. Shaft bearing (12) according to Claim 2 or 4, characterized in that the actuating device (52) has a toothed pinion (25, 26) which is attached to the rotary body (20, 21) and is engaged with a toothed rack (27, 28) which can be displaced back and forth by a piston/cylinder arrangement (32, 37, 33, 38).

7. Shaft bearing (12) according to Claim 6, characterized in that the piston/cylinder arrangement (32, 37, 33, 38) has a first piston (32) in a displaceable cylinder (33) and a second piston (37) which is attached to the displaceable cylinder (33) and is located in a second, fixed cylinder (38) in order to move three different bearing shells (22, 23, 24) selectively into an operating position.

8. Shaft bearing (12) according to Claim 1, characterized in that there is a liftable and lowerable support member (15) for the shaft end (11) to relieve the load on the bearing shells (22, 23, 24) of the shaft bearing (12).

9. Shaft bearing (12) according to Claim 8, characterized in that the support member (15) has a roll (42) which is connected via a rod (40) to a piston (43) for the radial displacement of the roll (42) relative to the shaft end (11) of the workpiece (10).

10. Shaft bearing (12) according to Claim 2, characterized in that the rotary body (20, 21) has a bore (46, 47, 48, 49) for feeding lubricant to the respective bearing shell (22, 23, 24) in the operating position.

11. Shaft bearing (12) according to Claim 1, characterized in that each bearing shell (22, 23, 24) has a hard metal insert (50) which serves to protect the bearing surface.

## Revendications

1. Palier d'arbre (12) sur une machine d'usinage (51) pour le montage des extrémités d'arbre (11) d'une pièce (10) à usiner en rotation, en particulier d'un cylindre d'héliogravure, comportant un support de palier (16) qui comprend une coque de palier interchangeable (22, 23, 24), contre laquelle s'appuie l'une des extrémités d'arbre (11), caractérisé en ce que dans le support de palier (16) sont prévues au moins deux coques de palier (22, 23, 24) ayant différents diamètres nominaux (22a, 23a, 24a), dont l'une se trouve en position de travail et l'autre en position de repos, et en ce qu'il est prévu un dispositif d'actionnement (52) pour le déplacement simultané de l'une des coques de palier (22) hors de sa position de travail jusque dans sa position de repos, et de l'autre coque de palier (23, 24) hors de sa position de repos jusque dans sa position de travail.

2. Palier d'arbre (12) selon la revendication 1, caractérisé en ce que les coques de palier (22, 23, 24) sont réalisées sur au moins un corps de rotation (20, 21), qui peut être tourné par le dispositif d'actionnement (52) autour d'un axe (53) parallèle à l'axe longitudinal du palier (54).

3. Palier d'arbre (12) selon la revendication 2, caractérisé en ce que dans un support de palier (16) sont prévus deux corps de rotation (20, 21) qui se trouvent en vis-à-vis par rapport à un plan médian du palier d'arbre (12), et en ce que les coques de palier (22) des deux corps de rotation (20, 21), qui se trouvent respectivement en position de travail forment conjointement un appui pour l'extrémité d'arbre (11).

4. Palier d'arbre (12) selon la revendication 3, caractérisé en ce que le dispositif d'actionnement (52) se trouve en liaison d'entraînement avec les corps de rotation (20, 21) pour la rotation commune et simultanée des corps de rotation (20, 21).

5. Palier d'arbre (12) selon la revendication 4, caractérisé en ce que les corps de rotation (20, 21) sont entraînés en sens de rotation égal ou opposé par le dispositif d'actionnement (52).

6. Palier d'arbre (12) selon l'une ou l'autre des revendications 2 et 4, caractérisé en ce que le dispositif d'actionnement (52) présente un pignon denté (25, 26) fixé sur le corps de rotation (20, 21), qui engrène avec une crémaillère (27, 28) qui peut être déplacée en va-et-vient par une unité à piston-et-cylindre (32, 37, 33, 38).

7. Palier d'arbre (12) selon la revendication 6, caractérisé en ce que l'unité à piston-et-cylindre (32, 37, 33, 38) présente un premier piston (32) dans un cylindre mobile (33), ainsi qu'un second piston (37) qui est fixé sur le cylindre mobile (33) et qui se trouve dans un second cylindre fixe (38), afin d'amener trois coques de palier différentes (22, 23, 24) au choix dans la position de travail.

8. Palier d'arbre (12) selon la revendication 1, caractérisé en ce qu'il est prévu pour l'extrémité d'arbre (11) un organe de support (15) susceptible d'être levé et abaissé, destiné à décharger les coques de palier (22, 23, 24) du palier d'arbre (12).

9. Palier d'arbre (12) selon la revendication 8, caractérisé en ce que l'organe de support (15) présente un galet (42) qui est relié via une tige (40) à un piston (43) pour le déplacement radial du galet (42) par rapport à l'extrémité d'arbre (11) de la pièce à usiner (10).

10. Palier d'arbre (12) selon la revendication 2, caractérisé en ce que le corps de rotation (20, 21) présente un perçage (46, 47, 48, 49) pour l'amenée de lubrifiant à la coque de palier (22, 23, 24) respectivement en position de travail.

11. Palier d'arbre (12) selon la revendication 1, caractérisé en ce que chaque coque de palier (22, 23, 24) présente un insert de métal dur (50) qui sert à la protection de la surface du palier.
